# EUROPÄISCHE PATENTSCHRIFT

(11) **EP 1 000 670 B1**
(45) Veröffentlichungstag und Bekanntmachung des Hinweises auf die Patenterteilung: **04.05.2005**
(21) Anmeldenummer: 99121211.9
(22) Anmeldetag: 23.10.1999
(51) Int. Cl.: B05D 1/00, B62D 65/00

(54) **Verfahren und Vorrichtung zum Auftrag des Unterbodenschutzes bei Fahrzeugkarosserien**
Process and apparatus for applying an underbody protection on a vehicule
Procédé et appareil pour appliquer une couche de protection sur le dessous d'une carrosserie de véhicule

(30) Priorität: 09.11.1998 DE 19851437
(43) Veröffentlichungstag der Anmeldung: 17.05.2000
(73) Patentinhaber: Volkswagen Aktiengesellschaft, 38436 Wolfsburg (DE)
(72) Erfinder: Leschke, Helmut, 38350 Helmstedt (DE); Quischinsky, Rolf, 38173 Dettum (DE); Plinke, Volker, 38550 Isenbüttel (DE); Jattke, Peter, Dipl.-Ing., 38442 Wolfsburg (DE)
(74) Vertreter: Fritz, Edmund Lothar, Dipl.-Chem.

(56) Entgegenhaltungen:
- EP-A- 0 278 482
- DE-U- 9 004 814
- US-A- 2 597 914
- US-A- 2 678 025
- US-A- 4 787 801
- US-A- 5 564 346

## Beschreibung

Die vorliegende Erfindung betrifft eine Fertigungsstraße zur Anbringung des Unterbodenschutzes an Karosserien gemäß dem Oberbegriff des Anspruchs 1 sowie ein Verfahren zum Auftrag des Unterbodenschutzes bei Karosserien in einer Fertigungsstraße gemäß dem Oberbegriff des Anspruchs 9.

Die Anbringung eines Unterbodenschutzes an Fahrzeugkarosserien (im folgenden kurz "Karosserien") gehört zu den wichtigsten Maßnahmen zum Schutz eines Automobils gegen Umwelteinflüsse und damit zur Erhöhung seiner Lebensdauer. Der Unterbodenschutz besteht darin, daß die gesamte Unterseite des Fahrzeuges durch eine Beschichtung versiegelt wird. Zusätzlich werden Nähte und Falzen besonders abgedichtet. Soweit die Abdichtung automatisch durch Roboter erfolgt, ist in der Regel eine Kontrolle und gegebenenfalls Nacharbeit durch Menschen erforderlich.

Nach dem Stand der Technik erfolgt die Anbringung des Unterbodenschutzes derzeit so, daß die Karosserie durch Drehgehänge von oben gegriffen und transportiert wird. Die Drehgehänge erlauben dabei eine begrenzte Schwenkung der Karosserie um ihre Längsachse, so daß für seitlich der Karosserie stehende Arbeitskräfte die Unterseite der Karosserie zugänglich wird. Weiterhin transportieren die Drehgehänge die Karosserien in einer derartigen Höhe, daß Personen und/oder Roboter von unten die Unterseite der Karosserie bearbeiten können.

Nachteilig bei diesem Verfahren nach dem Stand der Technik ist jedoch, daß die Arbeit größtenteils "über Kopf" verrichtet werden muß. Das ist zum einen für die Arbeitskräfte schwierig und anstrengend, zum anderen ist es für die notwendigen Arbeitsschritte, insbesondere das Verspritzen von Beschichtungsmaterial, ungünstig. Denn aufgrund der Schwerkraft wird das versprühte Beschichtungsmaterial von der Karosserie weggezogen, was zu einer großen Menge an verlorenem Material ("Overspray") führt und somit ökonomisch und ökologisch nachteilig ist. Außerdem greifen die bekannten Drehgehänge teilweise auch am Unterboden der Karosserie an, so daß sie dort zu beschichtende Bereiche verdecken und die Arbeit behindern.

Auch die US-A-25 97 914 betrifft eine Fertigungsstraße, bei der der Transport der Karosserien mittels eines Drehgehänges erfolgt. Bei Bedarf kann die Karosserie auch von Hand um die Achse einer Spindel gedreht werden. Im gewöhnlichen Betrieb ist jedoch die Spindel mit der Einrichtung für den Vorschub der Karosserie gekoppelt, so dass beim Vorschub die Karosserie gleichzeitig um ihre Achse gedreht wird.

Die DE 90 04 814 beschreibt eine Fertigungsstraße gemäß der Gattung des Anspruchs 1, bei der unter anderem auch eine Aufbringung. von Unterbodenschutz auf eine Karosserie vorgesehen ist, wobei die Karosserien entlang einer Transportbahn transportiert werden und die Karosserie dabei um ihre Längsachse schwenkbar gelagert ist. Es sind Ständer vorhanden, die Greifer tragen, die um die Längsachse der eingespannten Karosserie drehbeweglich gelagert sind. Durch ein Getriebe erfolgt eine Kopplung, so dass bei kontinuierlicher Fortbewegung des Transportwagens die Karosserie kontinuierlich um ihre horizontale Längsachse gedreht wird. Es ist nicht möglich, an den Greifern eine Drehung der Karosserie vorzunehmen, die unabhängig von dem translatorischen Vorschub erfolgt.

Aus der DE 44 36 901 A1 ist eine Fertigungsstraße für Automobile bekannt, bei der die Karosserien streckenweise durch eine Schwenkvorrichtung von ihrem Transportwagen (Skid) abgehoben werden, um dann um ihre Längsachse frei schwenkbar zu sein. Zu diesem Zweck wird die gesamte Schwenkvorrichtung unter den Transportwagen gefahren, und zwei Klammern der Schwenkvorrichtung werden in Richtung der Längsachse der Karosserie aufeinanderzubewegt, bis sie die Karosserie ergriffen und zwischen sich eingeklemmt haben. Sodann wird die Karosserie mit Hilfe der Klammern angehoben und durch Drehung der Klammern nach Bedarf um ihre Längsachse geschwenkt. Dies hat den Vorteil, daß insbesondere für Lackierarbeiten beliebige Seiten der Karosserie den entsprechenden Bearbeitungswerkzeugen zugewandt werden können. Nachteilig ist allerdings bei der Fertigungsstraße nach der DE 44 36 901 A1, daß die Schwenkvorrichtung die Karosserie noch über das Niveau der üblichen Transportbahn anheben muß. Das macht zum einen entsprechende Hebevorrichtungen notwendig, zum anderen befindet sich die Karosserie dann in einer Höhe, in der vom Personal oder den Maschinen nurmehr eine Bearbeitung von der Seite her erfolgt. Dies ist jedoch für viel Bearbeitungsschritte eine suboptimale Position. Insbesondere driften beim Lackieren Sprühnebel aufgrund der Schwerkraft von der Karosserie weg und führen damit zu erhöhtem Anfall von Overspray.

Die vorliegende Erfindung hat sich demgegenüber die Aufgabe gestellt, die Nachteile des Standes der Technik zu vermeiden und eine Fertigungsstraße der eingangs genannten Gattung und ein Verfahren zum Auftrag des Unterbodenschutzes bei Karosserien zur Verfügung zu stellen, welche vielseitigere Möglichkeiten der Bearbeitung an den einzelnen Bearbeitungsstationen zulassen und den manuellen und/oder automatischen Auftrag des Unterbodenschutzes in optimaler Position hinsichtlich Beschichtungsergebnis, Ergonomie und Materialersparnis erlauben.

Diese Aufgabe wird durch die kennzeichnenden Merkmale der Ansprüche 1 beziehungsweise 9 gelöst. Vorteilhafte Ausgestaltungen finden sich in den Unteransprüchen.

Die Fertigungsstraße gemäß der Erfindung ermöglicht den Auftrag des Unterbodenschutzes bei Karosserien, bei welchem wie beim Stand der Technik (Drehgehänge) die Karosserie in einer Transportvorrichtung um ihre Längsachse schwenkbar gelagert ist und an manuellen und/oder automatischen Bearbeitungsstationen entlangtransportiert wird. Es ist möglich, daß die Karosserie für einzelne oder alle Bearbeitungsschritte in eine Position geschwenkt wird, in der ihre Unterseite nach oben weist und in der die Unterseite in dieser Position bearbeitet wird. "Nach oben" weist die Unterseite dann, wenn die Karosserie gegenüber ihrer Normallage um 90° bis 270° um ihre Längsachse gedreht ist, vorzugsweise um 130° bis 230°, besonders bevorzugt um ca. 180°.

Anders als bei den üblichen Drehgehängen oder bei den Fertigungsstraßen gemäß der DE 44 36 901 A1 wird also die Karosserie und insbesondere ihre Unterseite nicht von unten oder von der Seite her bearbeitet, sondern von oben. Dies hat zum einen gegenüber der Über-Kopf-Arbeit ergonomische Vorteile, zum anderen unterstützt dabei die Schwerkraft den Beschichtungsvorgang, indem Sprühnebel auf die Unterseite der Karosserie fallen. Damit wird der Overspray-Abfall minimiert und eine Verschmutzung der Karosserie und der Anlagenperipherie reduziert, was auch einer Reduzierung der erforderlichen Fertigungszeit zugute kommt. Viele Teile des Unterbodens werden von oben her überhaupt erst oder jedenfalls besser zugänglich. Auch wird es möglich, den Fertigungsablauf zu ändern, da andere Bearbeitungsschritte möglich werden oder automatisiert werden können, z. B. Vorbereitungsarbeiten wie Folie einlegen, automatisches Schablonieren oder Anbringen von Kunststoffschalen.

Weiterhin ist das erfindungsgemäße Verfahren auch mit weniger apparativem Aufwand verbunden, da die Karosserie nicht in so große Höhen gehoben werden muß, daß unter ihr Personal und Roboter arbeiten können.

Eine spezielle Ausführungsart des erfindungsgemäßen Verfahrens kann folgende Bearbeitungsschritte des Unterbodens der Karosserie enthalten:
a) Schablonieren bei einer Schwenkung von 90° bis 130°;
b) Vorabdichten bei einer Schwenkung von 160° bis 180°;
c) Beschichtung bei einer Schwenkung von 160° bis 180°;
d) Deschablonieren bei einer Schwenkung von 160° bis 180°.

Während des Schablonierens a) werden solche Bereiche des Unterbodens maskiert, die nicht beschichtet werden dürfen. Dieser Bearbeitungsschritt wird vorzugsweise manuell ausgeführt, wobei die Arbeitskräfte seitlich neben der Karosserie stehen, welche gegenüber ihrer Normallage (0°) um 90° bis 130° um ihre Längsachse geschwenkt ist.

Beim Vorabdichten b) werden Nähte und Falzen durch Spritzen abgedichtet. Der eigentliche Unterbodenschutz erfolgt durch die Beschichtung in Schritt c) mit einem geeigneten Material, z. B. PVC. Beim Deschablonieren d) werden dann abschließend die Maskierungsschablonen wieder entfernt. Alle genannten Verfahrensschritte können weiterhin manuelle Erfolgskontrollen und Nachbearbeitungen enthalten.

Die Erfindung betrifft ferner eine Fertigungsstraße, die zur Anbringung des Unterbodenschutzes an Karosserien geeignet ist. Wie bei der gattungsbildenden DE 44 36 901 A1 enthält die Fertigungsstraße manuelle und/oder automatische Bearbeitungsstationen entlang einer Transportbahn und mindestens eine Transportvorrichtung, auf der ein Werkstück um seine Längsachse schwenkbar gelagert ist (die Transportvorrichtung befindet sich demnach unter dem Werkstück). Vorteilhaft ist dabei, daß die Transportvorrichtung relativ zu einer oder mehreren Bearbeitungsstationen auf einem derartigen Niveau angeordnet ist, daß die Bearbeitung des Werkstückes von oben erfolgen kann.

Bei der DE 44 36 901 A1 hebt die Schwenkvorrichtung das Werkstück noch über das normale Niveau der Transportbahn hinaus. Die in den Bearbeitungsstationen angeordneten Werkzeuge können daher das geschwenkte Werkstück nur von der Seite her erreichen. Demgegenüber nimmt die vorliegende Erfindung eine derartige relative Anordnung von Transportvorrichtung und (zumindest einigen) Bearbeitungsstationen vor, daß dort eine Bearbeitung von oben her erfolgen kann. Damit wird insbesondere das oben dargelegte Bearbeitungsverfahren für den Unterbodenschutz möglich, und es können die mit einer Bearbeitung von oben verbundenen Vorteile erzielt werden. Die genauen Werte für die Niveaulagen von Transportvorrichtung und Bearbeitungsstationen hängen davon ab, welche Bearbeitungsschritte in den Stationen durchgeführt werden sollen und welche Werkzeuge dafür vorhanden sind. Wichtig ist dabei jeweils, daß die nach oben geschwenkte Seite des Werkstücks in dem vom Werkzeug erreichbaren Arbeitsraum zu liegen kommt. Dies gilt insbesondere für an Bearbeitungsstationen befindliche Roboter.

Eine Möglichkeit der Niveauanpassung von Transportvorrichtung und Bearbeitungsstationen besteht darin, daß die Transportvorrichtung zumindest teilweise in den Boden der Werkhalle versenkt angeordnet ist. Dadurch wird erreicht, daß die Bearbeitungsstationen auf ihrem üblichen Niveau bleiben können, insbesondere können sie mit geringem Aufwand auf dem Boden der Werkhalle angeordnet sein.

Bei Bearbeitungsstationen mit manueller Bearbeitung können alternativ oder zusätzlich Arbeitsbühnen angeordnet sein, von denen aus das Personal die Bearbeitung der nach oben geschwenkten Werkstückunterseite vornehmen kann. Diese Bühnen können seitlich neben der Transportbahn angeordnet sein und/oder brückenartig die Transportbahn überspannen, so daß die Arbeitskräfte sich über dem Werkstück aufhalten können. Vorzugsweise haben die Arbeitsbühnen eine verstellbare Höhe, damit sie bei einem Umbau der Fertigungsstraße oder sogar während der laufenden Bearbeitung (z. B. für verschiedene Arbeitsschritte oder bei Personalwechsel) flexibel an die optimale Arbeitshöhe angepaßt werden können.

Die zur Erfindung gehörende Transportvorrichtung kann auf verschiedene Weise realisiert werden. Eine Möglichkeit besteht darin, daß sie Greifer hat, von denen mindestens einer in Längsrichtung (des eingesetzten Werkstückes) verschiebbar ist und mit denen das Werkstück gehalten und geschwenkt werden kann. Bei einer Karosserie als Werkstück können diese Greifer ähnlich wie bei der Vorrichtung nach der DE 44 36 901 A1 ausgebildet sein, d. h. es kann sich um gabelförmige Vorrichtungen handeln, welche in entsprechende Aufnahmen im hinteren und vorderen Bereich der Karosserie eingreifen. Diese Gabeln können einerseits translatorisch aufeinanderzubewegt werden, um so die Karosserie zwischen sich fest einzuspannen, andererseits können sie um diese Translationsachse (= Längsrichtung der eingespannten Karosserie) um 360° gedreht werden, um so die eingespannte Karosserie von allen Seiten zugänglich zu machen.

Weiterhin kann die erfindungsgemäße Transportvorrichtung über Halterungen verschiebebeweglich mit einer Führungsschiene verbunden sein, welche entlang der Transportbahn verläuft. Die Transportvorrichtung dient somit gleichzeitig als Transportwagen, auf dem das Werkstück (z. B. eine Karosserie) transportiert wird, wobei die Bahn des Wagens durch die Führungsschiene vorgegeben ist.

Dabei kann mindestens eine der Halterungen Antriebsmittel enthalten, welche für die aktive Bewegung der Transportvorrichtung (vorwärts und rückwärts) entlang der Führungsschiene sorgen. Die Antriebsmittel können vorzugsweise einen Elektromotor enthalten und z. B. Zahnräder antreiben, welche mit einer Zahnstange an der Führungsschiene zusammenwirken. Über geeignete Steuer- und Regelvorrichtungen kann die Bewegung der Transportvorrichtung entlang der Führungsschiene und/oder die Schwenkung des eingespannten Werkstückes kontrolliert werden und z. B. ein programmierter Arbeitsablauf erfolgen.

Weiterhin können an der Transportvorrichtung Stützrollen angeordnet sein, welche auf dem Boden oder in geeigneten Schienen geführt sind und der weiteren Abstützung, Balancierung und Führung der Transportvorrichtung dienen. Insbesondere können diese Stützrollen die Hauptlast des Gewichtes tragen und somit die Führungsschiene mit den entsprechenden Halterungen entlasten.

Im folgenden wird die Erfindung anhand der Figuren beispielhaft erläutert.
- Figur 1: zeigt ein Drehgehänge nach dem Stand der Technik.
- Figuren 2a-2b: zeigen Varianten der Transportvorrichtung in Frontansicht.
- Figur 3: zeigt die Transportvorrichtung in Seitenansicht.
- Figur 4: zeigt eine Straße für die Anbringung des Unterbodenschutzes.

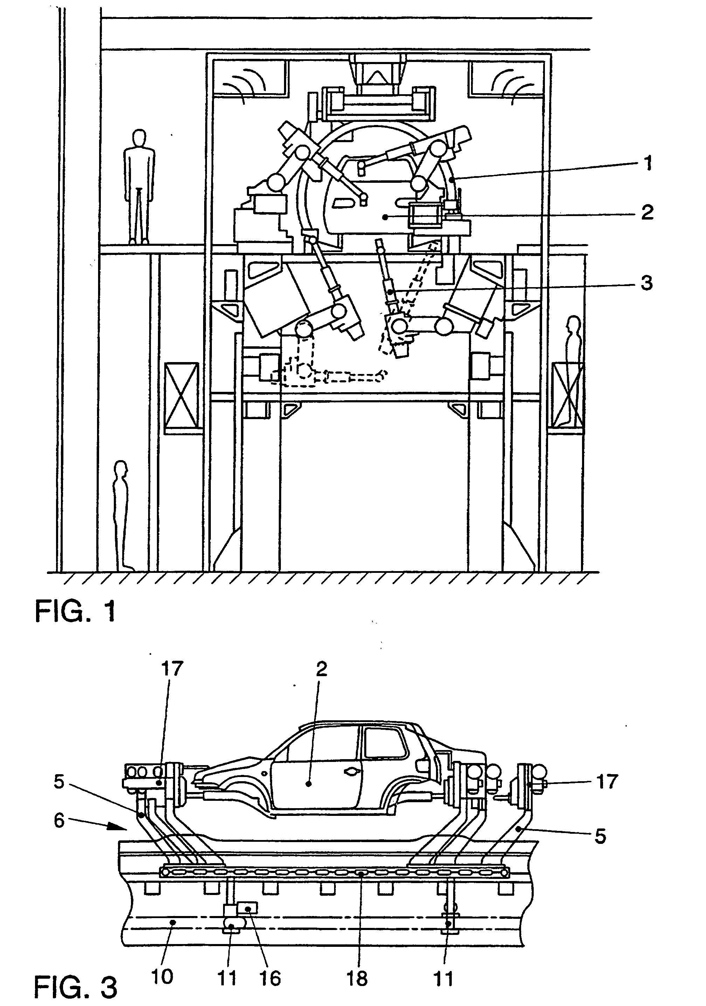

Figur 1 zeigt, wie nach dem Stand der Technik die Anbringung des Unterbodenschutzes erfolgt. Dabei befindet sich eine Karosserie 2 in einem Drehgehänge 1, welches an der Decke eines mehrstöckigen Produktionsgerüstes angeordnet ist und klammerartig die Karosserie umgreift. Die Halterung der Karosserie erfolgt insbesondere auch durch Stützen an der Unterseite, so daß letztere teilweise von der Aufhängung verdeckt wird. Um die Karosserie 2 herum und insbesondere unter derselben sind Roboter 3 angeordnet, welche z. B. das Sprühen der Beschichtung vornehmen. Nachteilig hierbei ist, daß aufgrund der Schwerkraft die von unten vorgenommene Beschichtung ungünstig ist. Ferner ist ein mehrstöckiges Produktionsgerüst erforderlich, damit die Roboter unterhalb der Karosserie einen ausreichenden Arbeits- und Bewegungsraum haben.

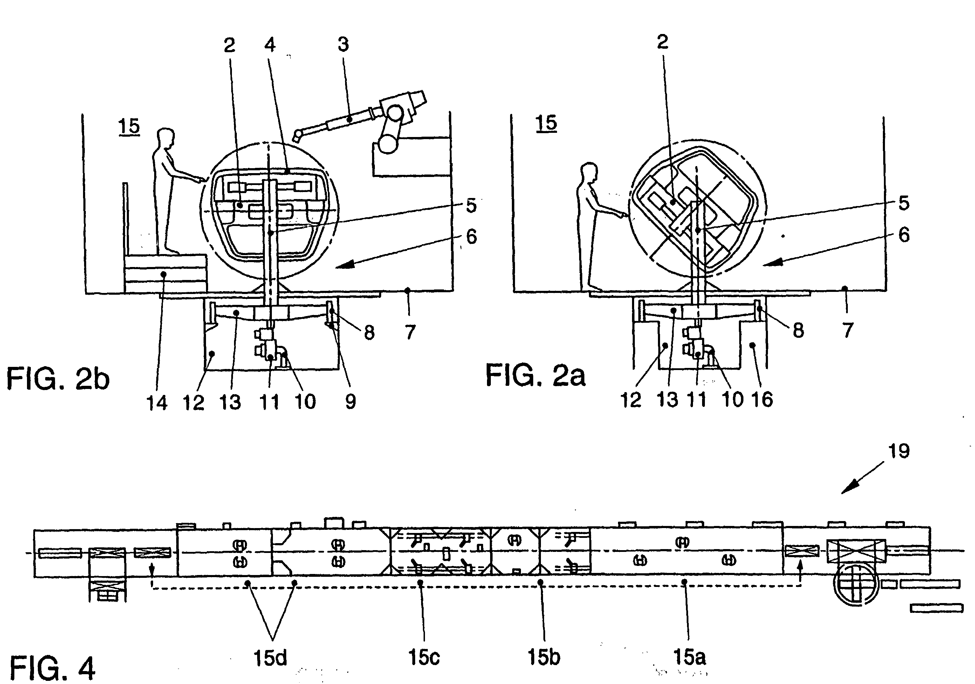

Die Figuren 2a und 2b zeigen demgegenüber eine Bearbeitungsstation 15 aus einer erfindungsgemäßen Fertigungsstraße in Frontansicht. Figur 3 zeigt sie entsprechend in der Seitenansicht. Ein wesentliches Element ist dabei die Transportvorrichtung 6, welche die zwei Ständer 5 enthält, die am einen Ende über eine Achse 18 verbunden sind und am anderen Ende die Greifer 17 tragen. An der Achse 18 sind weiterhin zwei Halter 11 angeordnet, welche die Transportvorrichtung verschiebebeweglich mit der Führungsschiene 10 verbinden. Die Halter können z. B. Rollen sein, welche auf der Führungsschiene abgestützt sind und/oder die Führungsschiene umgreifen. Am Halter 11 ist ferner ein Elektromotor 16 als Antriebsmittel vorgesehen, durch welchen der translatorische Vorschub der Transportvorrichtung erfolgt. Dies kann insbesondere über eine Zahnrad/Zahnstange Kombination erfolgen. Weiterhin ist mit der Achse 18 mindestens eine Querstange 13 mittig fest verbunden, wobei an den Enden der Querstange 13 Stützrollen 8 angeordnet sind. Diese Stützrollen 8 laufen entweder auf Absatzkanten 16 im Gebäude (Figur 2a) oder auf zugehörigen Schienen 9. Über die Querstange wird sowohl Gewicht getragen als auch eine Querstabilisierung der Transportvorrichtung erreicht. Für letztere wirkt sich insbesondere der lange Hebelarm der Querstange günstig aus.

Das Einspannen einer Karosserie 2 in der Transportvorrichtung erfolgt durch die beiden Greifer 17. Zur Aufnahme und Freigabe der Karosserie können die Ständer 5 - und damit die Greifer - in Längsrichtung der Karosserie translatorisch verschoben werden. Zu diesem Zweck sind die Ständer entsprechend verschiebebeweglich mit der Achse 18 verbunden. Die Vor- und Rückbewegung kann dabei z. B. über geeignete Elektromotoren erfolgen. Die Greifer sind im wesentlichen gabelförmig und kommen mit passenden Ansätzen an der Karosserie zum Eingriff. Ferner sind die Greifer um die Längsachse der eingespannten Karosserie um 360° (Volldrehung) drehbeweglich gelagert. Für die aktive Drehung befinden sich an der Greifern geeignete Elektromotoren. Außerdem sind an den Greifern Arretiervorrichtungen vorhanden, um die Schwenkbarkeit in Arbeitspositionen auszuschalten.

Die Frontansichten der Figuren 2a und 2b zeigen Varianten der Anordnung der Transportvorrichtung in einer Bearbeitungsstation 15. Bei beiden Varianten ist die Transportvorrichtung 2 teilweise in einem Schacht 12 im Boden 7 der Werkhalle versenkt. Typische Abmessungen des Schachtes betragen ca. 1 m Tiefe und ca. 1,8 m Breite.

Über den Boden ragen nur die Ständer 5 hinaus. Dadurch wird erreicht, daß die Karosserie tief steht und seitlich stehenden Arbeitskräften schon gut zugänglich ist (Figur 2a).

Die Zugänglichkeit der nach oben gedrehten Unterseite 4 der Karosserie für das Personal wird noch erhöht, wenn neben der Transportvorrichtung eine Arbeitsbühne 14 angeordnet ist (Figur 2b). Vorzugsweise ist diese in ihrer Höhe variabel. Eine typische Höhe beträgt 0,5 bis 0,8 m. Weiterhin zeigt Figur 2b einen Roboter 3, in dessen Arbeitsbereich sich die nach oben gedrehten Unterseite 4 der Karosserie befindet. Insbesondere kann es sich dabei um einen Roboter handeln, der mit Hilfe von Sprühpistolen die Auftragung der Beschichtung vornimmt.

Figur 4 zeigt schließlich eine Fertigungsstraße 19 für den Auftrag des Unterbodenschutzes bei Karosserien, welche verschiedene Bearbeitungsstationen 15a bis 15d enthält. Ein typischer Arbeitsablauf nach dem Umsetzen der Karosserie vom Skid auf die erfindungsgemäße Transportvorrichtung ("Drehwagen") ist dabei in der folgenden Tabelle wiedergegeben.

| **Rotation** | **Arbeitsart** | **Arbeitsumfang** | **Grund** |
|---|---|---|---|
| **1. Arbeitsfolge: Vorbereiten (Figur 4- 3a)** | | | |
| 90° | Manuell | Schablonen und Stopfen setzen | Maskieren von Bereichen, die nicht mit PVC beschichtet werden dürfen |
| 110° | Manuell | Schablonen und Stopfen setzen | Maskieren von Bereichen, die nicht mit PVC beschichtet werden dürfen |

| **2. Arbeitsfolge: Vorabdichten (Figur 4 - 3b)** | | | |
|---|---|---|---|
| 180° | Automatisch mit Roboter | Legen von Spritznähten auf der linken und rechten Seite der Karosserie mit Robotern | Abdichten von Nähten, Falzen etc. |
| 180° | Manuell | Kontrolle der gesamten Nähte, ggf. Nachlegen bzw. Nachstreichen der Naht | Überprüfung der Dichtigkeit |

| **3. Arbeitsfolge: Beschichtung (Figur 4 - 3c)** | | | |
|---|---|---|---|
| 180° | Automatisch | Unterbodenschutz-Beschichtung der linken und rechten Seite der Karosserie mit Robotern | Unterbodenschutz für die Karosserie |

| **4. Arbeitsfolge: Deschablonieren (Figur 4 - 3d)** | | | |
|---|---|---|---|
| 180° | Manuell | Clipse setzen und ggf. Unterbodenschutz nachspritzen | |
| 180° | Manuell | Deschablonieren der gesamten Karosserie und Unterbodenschutz-Kontrolle | Bereiche, die mit Schablonen maskiert wurden, für weitere Arbeitsgänge frei machen |
| 180° | Manuell | Unterbodenschutz-Kontrolle u. Nacharbeit (Unterbodenschutz nachspritzen) | |
| Übergabe vom Drehwagen auf Lackierskid. Der Drehwagen wird wieder zu Umsetzstation zurückgeführt | | | |
| Weitere Arbeitsfolge auf Skid | | | |

## Patentansprüche

1. Fertigungsstraße (19) zur Anbringung des Unterbodenschutzes an Karosserien (2), mit manuellen und/oder automatischen Bearbeitungsstationen (15) entlang einer Transportbahn und mit mindestens einer Transportvorrichtung (6), auf der ein Werkstück (2) um seine Längsachse schwenkbar gelagert ist, wobei Antriebsmittel (16) vorgesehen sind, durch die ein translatorischer Vorschub der Transportvorrichtung erfolgt,
wobei die Transportvorrichtung weiterhin Ständer (5) umfasst, die Greifer (17) tragen, die um die Längsachse der eingespannten Karosserie drehbeweglich gelagert sind,
**dadurch gekennzeichnet, dass** sich an den Greifern Elektromotoren für eine aktive Drehung befinden.

2. Fertigungsstraße nach Anspruch 1, **dadurch gekennzeichnet, dass** die Transportvorrichtung (6) Stützrollen (8) zur Abstützung und Führung aufweist, die in den Boden (7) der Werkhalle versenkt angeordnet sind.

3. Fertigungsstraße nach Anspruch 2, **dadurch gekennzeichnet, dass** die Stützrollen (8) auf Absatzkanten (16) im Gebäude oder auf zugehörigen Schienen (9) laufen.

4. Fertigungsstraße nach einem der Ansprüche 2 oder 3, **dadurch gekennzeichnet, daß** an Bearbeitungsstationen (15a, 15b, 15d) mit manueller Bearbeitung Arbeitsbühnen (14) angeordnet sind, vorzugsweise solche mit verstellbarer Höhe.

5. Fertigungsstraße nach einem der Ansprüche 3 bis 4, **dadurch gekennzeichnet, daß** an Bearbeitungsstationen (15b, 15c) zur automatischen Bearbeitung Roboter (3) derart angeordnet sind, daß die Oberseite des Werkstückes (2) in ihrem Arbeitsraum liegt.

6. Fertigungsstraße nach einem der Ansprüche 1 bis 5, **dadurch gekennzeichnet, dass** mindestens einer der Greifer (17), mit denen das Werkstück (2) gehalten und geschwenkt werden kann in Längsrichtung verschiebbar ist.

7. Fertigungsstraße nach einem der Ansprüche 1 bis 6, **dadurch gekennzeichnet, daß** die Transportvorrichtung (6) über Halterungen (11) verschiebebeweglich mit einer Führungsschiene (10) verbunden ist, welche entlang der Transportbahn verläuft.

8. Fertigungsstraße nach Anspruch 7, **dadurch gekennzeichnet, daß** mindestens eine Halterung (11) Antriebsmittel (16), vorzugsweise einen Elektromotor, zur Bewegung der Transportvorrichtung (6) entlang der Führungsschiene (10) hat.

9. Verfahren zum Auftrag des Unterbodenschutzes bei Karosserien in einer Fertigungsstraße gemäß einem der Ansprüche 1 bis 8, **dadurch gekennzeichnet, dass** die Karosserie (2) für einzelne oder alle Bearbeitungsschritte in eine Position geschwenkt wird, in der ihre Unterseite (4) nach oben weist und in dieser Position bearbeitet wird.

10. Verfahren nach Anspruch 9, **dadurch gekennzeichnet, daß** es folgende Bearbeitungsschritte des Unterbodens der Karosserie enthält:
Schablonieren bei einer Schwenkung von 90° bis 130°;
Vorabdichten bei einer Schwenkung von 160° bis 180°;
Beschichtung bei einer Schwenkung von 160° bis 180°;
Deschablonieren bei einer Schwenkung von 160° bis 180°.

## Claims

1. Production line (19) for application of the underbody coating to vehicle bodyshells (2), having manual and/or automated machining stations (15) along a conveyor and having at least one conveying device (6), on which a workpiece (2) is supported so that it can pivot about its longitudinal axis, drive means (16) being provided for a translational feed of the conveying device, the conveying device further comprising stands (5), which carry grippers (17), which are supported so that they can rotate about the longitudinal axis of the clamped vehicle bodyshell, **characterized in that** electric motors for an active rotation are situated on the grippers.

2. Production line according to Claim 1, **characterized in that** the conveying device (6) has supporting rollers (8) for support and guidance, the rollers being sunk in the floor (7) of the production shop.

3. Production line according to Claim 2, **characterized in that** the support rollers (8) run on stepped ledges (16) in the building structure or on associated rails (9).

4. Production line according to either of Claims 2 or 3, **characterized in that** working platforms (14), preferably height-adjustable, are arranged at machining stations (15a, 15b, 15d) having manual machining.

5. Production line according to either of Claims 3 to 4, **characterized in that** robots (3) are arranged at machining stations (15b, 15c) for automatic machining, in such a way that the top side of the workpiece (2) lies inside their working space.

6. Production line according to any one of Claims 1 to 5, **characterized in that** at least one of the grippers (17), with which the workpiece (2) can be held and pivoted, is longitudinally displaceable.

7. Production line according to any one of Claims 1 to 6, **characterized in that** the conveying device (6) is displaceably connected by way of mountings (11) to a guide rail (10), which runs along the conveyor.

8. Production line according to Claim 7, **characterized in that** at least one mounting (11) has drive means (16), preferably an electric motor, for moving the conveying device (6) along the guide rail (10).

9. Method for application of the underbody coating to vehicle bodyshells on a production line according to any one of Claims 1 to 8, **characterized in that** the vehicle bodyshell (2), for individual or for all machining operations, is pivoted into a position in which its underside (4) faces uppermost and is machined in this position.

10. Method according to Claim 9, **characterized in that** it comprises the following machining operations on the underbody of the vehicle bodyshell:
placing of strickle at a pivoted angle of 90° to 130°;
presealing at a pivoted angle of 160° to 180°;
coating at a pivoted angle of 160° to 180°;
removal of strickle at a pivoted angle of 160° to 180°.

## Revendications

1. Chaîne de fabrication (19) pour le montage de la protection du dessous de carrosseries (2), comprenant des postes de traitement manuels et/ou automatiques (15) le long d'une voie de transport et comprenant au moins un dispositif de transport (6) sur lequel une pièce (2) est montée de manière à pouvoir pivoter autour de son axe longitudinal, des moyens d'entraînement (16) étant prévus pour permettre une avance en translation du dispositif de transport,
le dispositif de transport comprenant en outre des montants (5) qui portent des dispositifs de préhension (17) qui sont montés à rotation autour de l'axe longitudinal de la carrosserie fixée par serrage,
**caractérisée en ce que** des moteurs électriques permettant une rotation active sont prévus sur les dispositifs de préhension.

2. Chaîne de fabrication selon la revendication 1, **caractérisée en ce que** le dispositif de transport (6) présente des rouleaux de support (8) pour le support et le guidage, lesquels sont disposés en position renfoncée dans le sol (7) de l'atelier de fabrication.

3. Chaîne de fabrication selon la revendication 2, **caractérisée en ce que** les rouleaux de support (8) roulent sur des rebords étagés (16) dans le bâtiment ou sur des rails associés (9).

4. Chaîne de fabrication selon l'une quelconque des revendications 2 ou 3, **caractérisée en ce que** l'on dispose sur des postes de traitement (15a, 15b, 15d) à traitement manuel des plates-formes de travail (14), de préférence de hauteur réglable.

5. Chaîne de fabrication selon l'une quelconque des revendications 3 et 4, **caractérisée en ce que** l'on dispose sur des postes de traitement (15b, 15c) à traitement automatique des robots (3), de telle sorte que le côté supérieur de la pièce (2) se situe dans leur espace de travail.

6. Chaîne de fabrication selon l'une quelconque des revendications 1 à 5, **caractérisée en ce qu'**au moins l'un des dispositifs de préhension (17) avec lesquels la pièce (2) peut être maintenue et pivotée, est déplaçable dans la direction longitudinale.

7. Chaîne de fabrication selon l'une quelconque des revendications 1 à 6, **caractérisée en ce que** le dispositif de transport (6) est relié, de manière à pouvoir se déplacer, par le biais de fixations (11), à un rail de guidage (10) qui s'étend le long de la voie de transport.

8. Chaîne de fabrication selon la revendication 7, **caractérisée en ce qu'**au moins une fixation (11) a des moyens d'entraînement (16), de préférence un moteur électrique, pour le déplacement du dispositif de transport (6) le long du rail de guidage (10).

9. Procédé d'application de la protection du dessous de carrosseries dans une chaîne de fabrication selon l'une quelconque des revendications 1 à 8, **caractérisé en ce que** la carrosserie (2) est pivotée pour certaines étapes de traitement ou pour toutes les étapes de traitement dans une position dans laquelle son côté inférieur (4) est tourné vers le haut et est traitée dans cette position.

10. Procédé selon la revendication 9, **caractérisé en ce qu'**il comprend les étapes de traitement suivantes du dessous de la carrosserie :
application d'un pochoir avec un pivotement de 90° à 130° ;
préétanchéification avec un pivotement de 160° à 180° ;
revêtement avec un pivotement de 160° à 180° ;
enlèvement du pochoir avec un pivotement de 160° à 180°.
